(19)

**Europäisches Patentamt**
**European Patent Office**
**Office européen des brevets**

(11)  **EP 4 402 521 B1**

(12)  # EUROPEAN PATENT SPECIFICATION

(45) Date of publication and mention
of the grant of the patent:
**10.12.2025 Bulletin 2025/50**

(21) Application number: **22797816.0**

(22) Date of filing: **15.09.2022**

(51) International Patent Classification (IPC):
**G02B 5/30** *(2006.01)*    **G02B 27/28** *(2006.01)*
**G02B 1/00** *(2006.01)*    **G02B 1/08** *(2006.01)*
**G02B 5/08** *(2006.01)*

(52) Cooperative Patent Classification (CPC):
**G02B 1/002; G02B 5/3041; G02B 5/3083;**
**G02B 27/286;** G02B 1/08; G02B 5/0808

(86) International application number:
**PCT/GB2022/052337**

(87) International publication number:
**WO 2023/041916 (23.03.2023 Gazette 2023/12)**

(54) **POLARISATION CHANGING STRUCTURES**

POLARISATIONSVERÄNDERNDE STRUKTUREN

STRUCTURES À CHANGEMENT DE POLARISATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **15.09.2021 GB 202113182**

(43) Date of publication of application:
**24.07.2024 Bulletin 2024/30**

(73) Proprietors:
• **Sintef TTO AS**
  **7465 Trondheim (NO)**
• **Syddansk Universitet**
  **5230 Odense M (DK)**

(72) Inventors:
• **BOZHEVOLNYI, Sergey**
  **5230 Odense (DK)**
• **MENG, Chao**
  **5230 Odense (DK)**
• **DING, Fei**
  **5230 Odense (DK)**
• **THRANE, Paul Conrad Vaagen**
  **0737 Oslo (NO)**

(74) Representative: **Dehns**
**10 Old Bailey**
**London EC4M 7NG (GB)**

(56) References cited:
• **PLUM ERIC: "Extrinsic chirality: Tunable optically active reflectors and perfect absorbers", APPLIED PHYSICS LETTERS, AMERICAN INSTITUTE OF PHYSICS, 2 HUNTINGTON QUADRANGLE, MELVILLE, NY 11747, vol. 108, no. 24, 13 June 2016 (2016-06-13), XP012208520, ISSN: 0003-6951, [retrieved on 19010101], DOI: 10.1063/1.4954033**
• **FEI DING ET AL: "Gradient metasurfaces: a review of fundamentals and applications", REPORTS ON PROGRESS IN PHYSICS, INSTITUTE OF PHYSICS PUBLISHING, BRISTOL, GB, vol. 81, no. 2, 18 December 2017 (2017-12-18), pages 26401, XP020323762, ISSN: 0034-4885, [retrieved on 20171218], DOI: 10.1088/1361-6633/AA8732**
• **MENG CHAO ET AL: "Dynamic piezoelectric MEMS-based optical metasurfaces", SCI. ADV, 1 January 2021 (2021-01-01), pages 1 - 12, XP093004567, Retrieved from the Internet <URL:https://www.science.org/doi/10.1126/sciadv.abg5639> [retrieved on 20221202]**

EP 4 402 521 B1

- **MENG CHAO ET AL: "Full-range birefringence control with piezoelectric MEMS-based metasurfaces", RESEARCH SQUARE, 3 December 2021 (2021-12-03), pages 1 - 21, XP093004555, Retrieved from the Internet <URL:https://www.researchgate.net/publication/356761530_Full-range_birefringence_control_with_piezoelectric_MEMS-based_metasurfaces> [retrieved on 20221202], DOI: 10.21203/rs.3.rs-1137478/v1**

## Description

The present invention relates to polarisation changing structures for changing the polarisation of incident light.

Polarisation changing structures are used in many applications to alter the polarisation of transmitted or reflected light with respect to the polarisation state of incident light.

One example of known polarisation changing structures are polarisers which operate by absorbing or deflecting light having a specific linear polarisation, and thereby introduce power loss into the considered optical channel.

Another example of known polarisation changing structures are polarisation changing wave plates which do not impose a power loss but instead change the state of polarisation by introducing a phase difference between two orthogonally polarised waves upon their transmission through a birefringent material for which the index of refraction is different for light linearly polarised along one or the other of two certain perpendicular crystal axes. By appropriate choice of the relationship between the thickness of the crystal, the wavelength of the light, and the variation of the index of refraction, it is possible to introduce a controlled phase shift between the two polarisation components of a light wave, thereby altering its overall polarisation state.

At present, waveplates are fabricated to achieve a specific output, for example a waveplate may be configured as a half wave plate, or a quarter wave plate. In applications in which the desired polarisation state of the output may change, it is typically necessary to swap between different waveplates. This not only limits the speed of operation, but also requires a suitable mechanical arrangement to deploy multiple different waveplates, the cost of which can be significant. Such mechanical arrangements are also typically relatively large, heavy and may not be fully reliable.

Tunable waveplates have been experimented with such as liquid crystal waveplates and Pockels cells. However, liquid crystal waveplates are slow to change configuration, whilst Pockels cells are prohibitively expensive and require very high voltage to operate.

XP012208520 discloses relevant prior art.

According to a first aspect of the invention, there is provided an apparatus for adjustably changing the polarisation state of incident light having at least a first wavelength, the apparatus comprising:

a polarisation changing optical metasurface (OMS) arranged to reflect light of a first polarisation state, and to transmit light of a second polarisation state, said second polarisation state being different to said first polarisation state; and a mirror arranged to reflect the transmitted light of the second polarisation state, wherein the apparatus is arranged to move the mirror and/or the polarisation changing OMS relative to one another to alter a separation between the polarisation changing OMS and the mirror, thereby altering a phase difference between the light reflected by the polarisation changing OMS and the light reflected by the mirror such that a combined polarisation state of light reflected by the apparatus is adjustable.

According to a second aspect of the invention, there is provided a system comprising:

a light source configured to emit light of at least a first wavelength containing the first polarisation state and the second polarisation state; and an apparatus as described in relation to the first aspect of the invention,

wherein the light source and apparatus are arranged such that the light emitted by the light source is incident on the apparatus.

The light source of the system may emit unpolarised light, but in a set of embodiments, the light source is configured to emit linearly polarised light.

According to a third aspect of the invention, there is provided a method of adjustably changing the polarisation state of incident light having at least a first wavelength, the method comprising:

reflecting light from said incident light having a first polarisation state with a polarisation changing optical metasurface (OMS); transmitting light from said incident light having a second polarisation state through said polarisation changing OMS, said second polarisation state being different to said first polarisation state; reflecting the transmitted light of the second polarisation state with a mirror; and moving the mirror and/or the polarisation changing OMS in order to alter a separation between the polarisation changing OMS and the mirror thereby altering a phase difference between the light reflected by the polarisation changing OMS and the light reflected by the mirror such that a combined polarisation state of light reflected by both the polarisation changing OMS and the mirror is adjusted.

Thus it will be seen by those skilled in the art that in accordance with the invention, an adjustable polarisation changing structure can be provided without having to provide a plurality of different wave plates which have to be moved. Moreover, since the overall polarisation state may be dependent only on the separation of the mirror and the OMS, a greater number of different states may be achievable. For example by adjusting the separation between the polarisation changing OMS and the mirror in a continuous fashion, the polarisation state of the overall reflected light can be continuously adjusted. This may provide greater flexibility, the ability to operate more quickly and lower cost.

In a set of embodiments the OMS is configured so that it predominantly reflects light of the first polarisation, transmits light of the second polarisation, independent of the separation between the OMS and the mirror.

In a set of embodiments, the apparatus is arranged such that said separation between the OMS and the mirror has a minimum value of at least 50 nm. In a further set of embodiments, the separation between the OMS and the mirror is at least 75 nm. In a set of embodiments, the apparatus is arranged such that the separation between the OMS and the mirror has a minimum value of at least 10% of the incident wavelength, i.e. the first wavelength. Where the incident light comprises a plurality of wavelengths, the first wavelength may be the shortest wavelength of the incident light.

In a set of embodiments, the apparatus is arranged such that the separation between the polarisation changing OMS and the mirror has a maximum value of at most ten wavelengths, e.g. at most five wavelengths, e.g. one wavelength

In a set of embodiments, the apparatus is arranged to alter the separation between the polarisation changing OMS and the mirror between respective minimum and maximum values which differ by at least 700 nm, e.g. 725 nm; or by at least 450 nm, e.g. 425 nm. In one set of examples the minimum separation is 75 nm. In a set of examples the maximum separation is less than 1000nm, e.g. 800 nm or less than 600 nm, e.g. 550 nm.

In a set of embodiments the apparatus is arranged to be able to alter the separation between the polarisation changing OMS and the mirror between respective minimum and maximum values which differ by at least 9/10 of the first wavelength, or by at least 6/10 of the first wavelength. In one set of examples the minimum separation is 1/10 of the first wavelength.

In order to achieve good efficiency of the apparatus, low transmission of the first polarisation state is of greater importance than high transmission of the second polarisation state. In an ideal OMS, the transmission of the first polarisation state would be 0%, and the transmission of the second polarisation state would be 100%. Real world OMS' will be imperfect, and the inventors have appreciated that in the present application, it is better to sacrifice some transmission efficiency of the second polarisation state to ensure that the percentage of the first polarisation state which is transmitted by the OMS is low.

As discussed above, the OMS is arranged to reflect light of the first polarisation state, and to transmit light of the second polarisation state, but more particularly, in a set of embodiments, the OMS is arranged to transmit less than 10%, e.g. less than 5% of the light of the first polarisation state. In an overlapping set of embodiments, the OMS is arranged to transmit more than 40% e.g. more than 50% of the light of the second polarisation state. It will be understood that a proportion of the incident light may be absorbed by the OMS and by the mirror.

The OMS may be configured to achieve the respective reflection and transmission of the first and second polarisation states with many different polarisation states, having many different relationships between the polarisation states, but in a set of embodiments, the OMS is arranged such that the first polarisation state is orthogonal to the second polarisation state.

The OMS may be constructed of any suitable material such as any suitable metal, for example the OMS may be constructed from aluminium. However, in a set of embodiments, the OMS is constructed from gold.

The OMS may be constructed of a plurality of individual nanostructures. In a set of embodiments the nanostructures form a periodically repeating pattern. In a set of such embodiments the spatial period of the repeating pattern is less than the first wavelength.

In a set of embodiments the nanostructures have dimensions which are all less than the first wavelength.

In a set of embodiments, the nanostructures are each cuboidal in shape, and have a thickness which is smaller than both their length and width. It will be understood that the thickness of the nanostructures is measured along the axis which is substantially parallel to the direction of the incident light which the OMS is configured to manipulate. It will similarly be understood that the length and width of the nanostructures are measured in the plane which is substantially perpendicular to the direction of the incident light which the OMS is configured to manipulate.

The apparatus may adjust the separation between the OMS and the mirror by moving the OMS whilst keeping the mirror stationary, but in a set of embodiments, the apparatus is arranged to move the mirror relative to the OMS. In such a set of embodiments, the apparatus may further be arranged to move the OMS relative to the mirror, or to keep the OMS stationary relative to the mirror.

In embodiments where the apparatus is configured to move the mirror relative to the OMS, the mirror may be moved by any suitable means. However, in a set of embodiments, the mirror is a Micro-electromechanical systems (MEMS) mirror which is translatable upon application of a suitable voltage. In a set of embodiments the mirror comprises a feedback mechanism, e.g. a capacitive feedback mechanism to regulate its separation from the OMS and/or its degree of planarity.

The mirror may be constructed from any suitable material, however, in a set of embodiments, the mirror is constructed from gold.

In a set of embodiments, the system of the second aspect comprises a plurality of apparatuses as described in relation to the first aspect of the invention which may have different or identical characteristics to each other. In such embodiments, the apparatuses may be arranged such that incident light is reflected from a first apparatus, and then subsequently reflected from a second apparatus (i.e. in a serial arrangement). Alternatively or additionally, light from the light source could be divided into a plurality of beams, for example by any known beam splitter, with each beam being reflected by a spate apparatus, before interferometrically recombining (i.e. in a parallel arrangement). Such embodiments may enable more complex polarisation changes and beam properties to be realised.

It will be seen by those skilled in the art that the invention may have a plurality of potential applications. For example, the apparatus may be used as a stand-alone component in optical setups, replacing the many separate dedicated waveplates which are currently used. Further, the invention may be used in compact and lightweight ellipsometry devices, performing functions such as material characterization, bio-sensing, and optical communication. The invention may also be used for light projection with polarisation control by reflecting light from the apparatus before projecting the light. Such light projection may be useful for machine vision, where polarisation information could provide more details on surface profile, materials and edge locations, 3-dimensional measurements with surface profile information, optical communication, and super resolution microscopy. The above applications are provided as examples only, and the skilled person will appreciate that the possible applications of the present invention are not limited to the examples discussed above.

In the current disclosure, it will be understood that a polarisation changing optical metasurface (OMS) is an artificial sheet material having sub-wavelength thickness, and sub-wavelength scaled patterns in the planar dimensions which are formed by nanostructures. The polarisation changing OMS has differing transmission and reflection properties for different polarisation states and is able to manipulate radiation wavefronts at a subwavelength scale.

The features described above in relation to different aspects and embodiments of the present invention may be combined in various combinations. It will be understood that the combination of features in the following description and drawings are intended to be illustrative, and are non-limiting.

An embodiment of the invention will now be described, by way of example only, with reference to the accompanying drawings in which:

Fig. 1 is a schematic diagram of an apparatus in accordance with an embodiment of the present invention;
Fig. 2 is a schematic top-down view of an optical metasurface in accordance with an embodiment of the present invention;
Fig. 3 is a graph showing the normalized transmission of two polarisation states through the OMS of Figure 2 plotted against the wavelength of the incident light;
Fig. 4 is a graph showing the normalized reflection of two polarisation states from the OMS of Figure 2, plotted against the wavelength of the incident light;
Fig. 5 shows the apparatus of Figure 1 with the mirror in a raised position;
Fig. 6 is a flow diagram illustrating the a method in accordance with the present invention;
Fig. 7 is a graph showing the normalized reflection of two polarisation states from the apparatus of Figure 1, plotted against the size of the gap;
Fig. 8 is a graph showing the phase of two polarisation states, and the phase difference between the two polarisation states plotted against the size of the gap;
Fig. 9 shows an OMS with an alternative nanostructure geometry to that shown in Figure 2;
Fig. 10 shows a further OMS with an alternative nanostructure geometry to those shown in Figure 2 and Figure 9; and
Fig. 11 shows another OMS with an alternative nanostructure geometry.

## Detailed description

In the below description, terms such as raised, high, low, height, and top are used. It will be understood that these terms refer to the orientation of the accompanying drawings, in which the light incident on the apparatus originates from the top of the drawings.

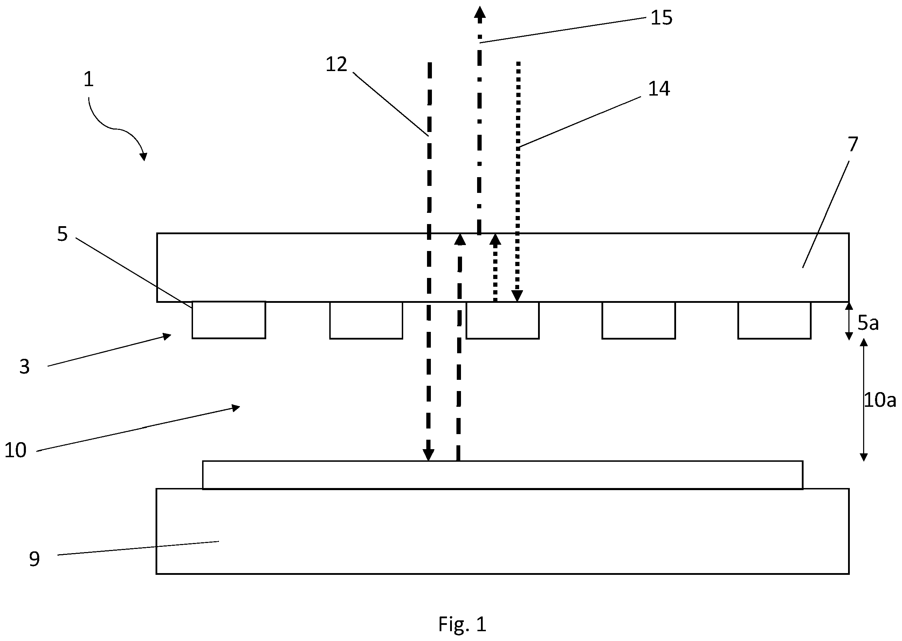

Figure 1 is a schematic diagram of an apparatus 1 according to an embodiment of the invention. The apparatus 1 comprises an optical metasurface (OMS) 3 which is comprised of a plurality of nanostructures 5. The structure of the OMS 3 is discussed in detail below. The OMS 3 is mounted on a glass substrate 7 such that the incident light passes through the glass substrate before reaching the OMS 3. The substrate 7 provides mechanical protection of the device from the environment. Use of glass is not essential - other optically transmissive materials could be used depending on the wavelengths of light being used. For example in other embodiments a silicon substrate could be used as this is typically transmissive in the infra-red range. This could be advantageous in allowing the OMS to be mounted on a MEMS actuator with the mirror remaining static.

Anti-reflective coatings can be used on the surface of the substrate 7 in order to increase the efficiency of device by reducing unwanted reflection, for example from the surface of the substrate 7 which incident light first encounters before reaching the OMS 3.

The apparatus 1 further comprises a mirror 9 which in the illustrated embodiment is an ultra-flat MEMS mirror having a gold reflective surface The mirror is, for example, constructed as described in Bakke, Thor, and Ib-Rune Johansen. "A robust, non-resonant piezoelectric micromirror." 16th International Conference on Optical MEMS and Nanophotonics. IEEE, 2011.

The mirror 9 is designed to move across the range from a minimum separation of 75 nm from the OMS 3 to a maximum separation of 600 nm from the OMS 3. Further, if the resting position of the mirror, when there is no voltage actuating the mirror, is more than 600nm away from the OMS 3, then the mirror 9 must also be designed to move across the distance between the resting position and 600 nm, in addition to moving across the separation range from 600 nm to 75 nm. The abovementioned range of movement can be achieved with a driving voltage of up to two volts.

To get the same polarisation change across the whole device it is advantageous to have the reflecting surface of the mirror as flat as possible, to within 20 nm across the whole area which overlaps the OMS 3. There may be small (compared to the OMS area) particles or uneven areas that exceed this height difference, but they should not protrude so far above the surface that they physically hinder the movement of the mirror.

The space between the OMS 3 and the mirror 9 forms a gap 10. The MEMS mirror 9 is configured to move relative to the substrate 7 and OMS 3 upon application of a suitable voltage such that the size 10a of the gap 10 between the OMS and the mirror 9 can be adjusted. In Figure 1, light incident on the apparatus 1 is shown to contain light which is linearly polarised along the Y axis 12, and light which is linearly polarised along the X axis 14. The figure also shows the light 15 which is reflected by the apparatus 1.

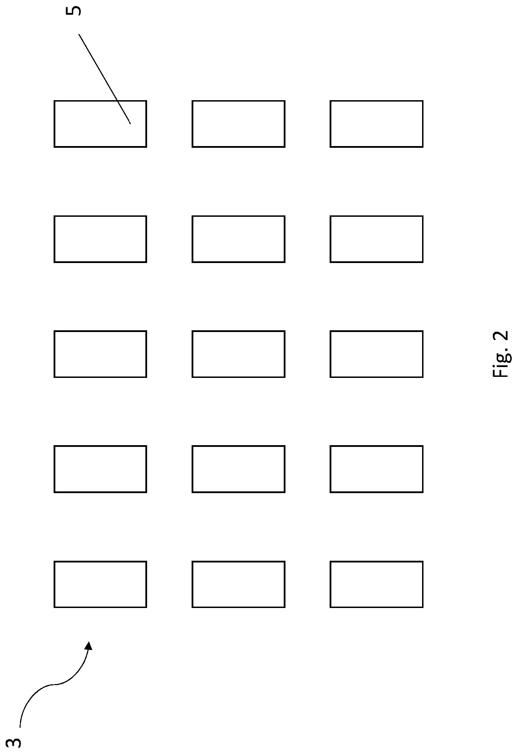

Figure 2 is a highly schematic diagram of the OMS 3 showing the individual nanostructures 5. These nanostructures have both length and width less than the wavelength of the incident light. There are arranged in a periodically repeating pattern in two directions (horizontally and vertically). Each of the spatial periods is also less than the wavelength of the incident light.

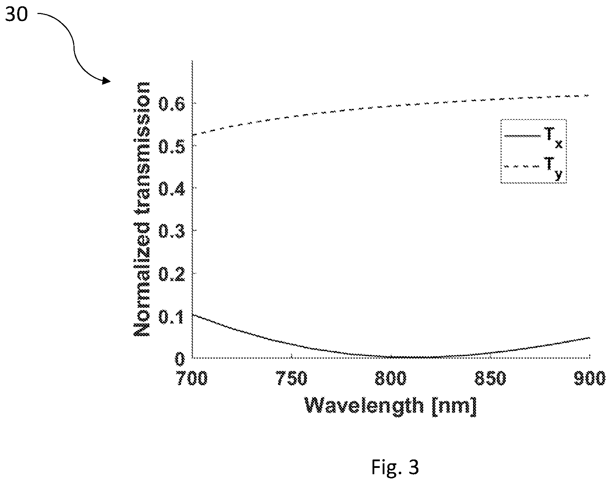

When light linearly polarised along the X and Y axes is incident on the OMS 3, the OMS 3 transmits light which is polarised linearly along the Y axis 12, and reflects light which is polarised linearly along the X axis 14. The inventors have appreciated that whilst transmission and reflection will not in practice be perfect, priority when designing the OMS 3 should be to achieve low transmission (for example less than 5%) of one polarisation state (light linearly polarised in the X axis 14 in the illustrated embodiment), with high transmission of the other polarisation state (light linearly polarised along the Y axis 12 in the illustrated embodiment) being a secondary consideration. This is illustrated with reference to Fig. 3.

In the illustrated embodiment each nanostructure is made of gold, and has dimensions of 200 nm by 100 nm, with a thickness of 50 nm. The nanostructures 5 are arranged in a 2-dimensional array with a periodicity of 250 nm. The specific configuration in the illustrated embodiment is designed to perform best when the incident light is monochromatic and has a wavelength of 800 nm.

Figure 3 is a graph 30 showing the normalized transmission $T_y$, $T_x$, through the OMS 3 of the illustrated embodiment of the light polarised linearly along the Y axis 12, and the light linearly polarised along the X axis 14 respectively, plotted against the incident wavelength. It can be seen from the graph of Figure 3 that at an incident wavelength of 800nm, the normalized transmission $T_x \approx 0$. Whilst the light linearly polarised along the Y axis 12 is not fully transmitted, with the normalized transmission $T_y$ being between 0.5 and 0.6 across the wavelength range of 700nm to 900nm which is plotted, this transmission is significantly higher than any transmission of the light linearly polarised along the X axis 14, and so the OMS 3 is effective in providing the transmission characteristics outlined above.

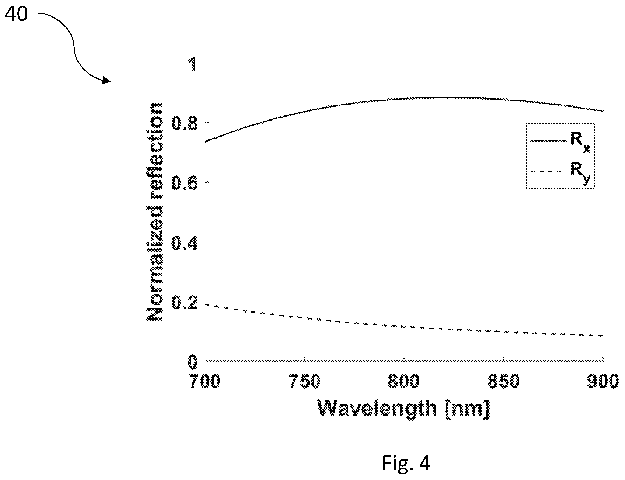

Figure 4 is a graph 40 showing the normalized reflection $R_y$, $R_x$, from the OMS 3 of the illustrated embodiment of the light polarised linearly along the Y axis 12, and the light linearly polarised along the X axis 14 respectively, plotted against the incident wavelength. In the illustrated embodiment, the OMS 3 is configured to reflect light linearly polarised along the X axis 14, and to transmit light linearly polarised along the Y axis 12, and from the graph 40 of Figure 4, it can be seen that the normalized reflection $R_x$ is much greater (>0.8 at 800nm) than the normalized reflection $R_y$ (<0.2 at 800nm), again illustrating that the OMS 3 is effective in providing the required characteristics.

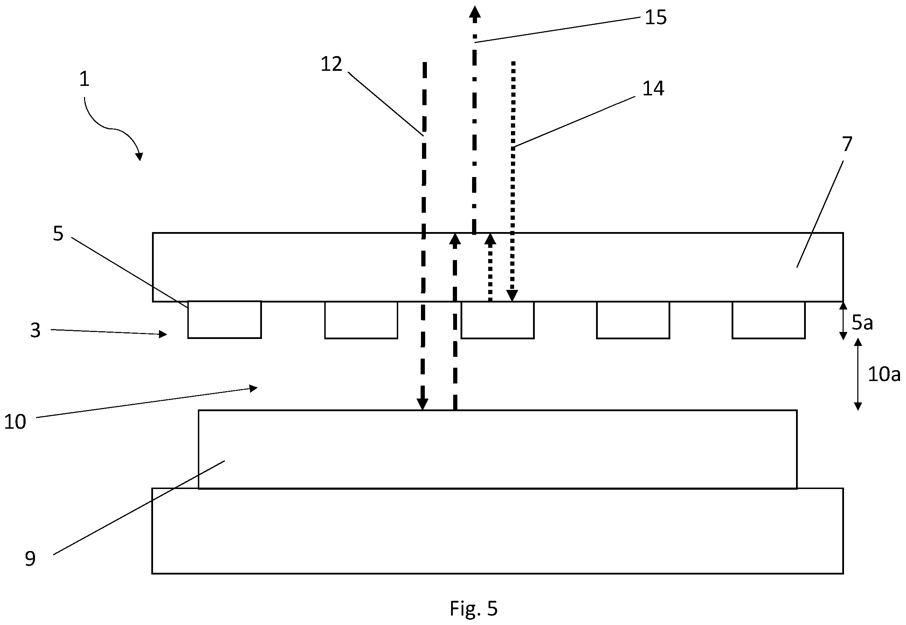

Operation of the device 1 will now be explained with reference to Figure 1 and Figure 5. Figure 1 shows the apparatus 1 with the MEMS mirror 9 in a low position such that the gap 10 between the mirror 9 and the OMS 3 has a relatively large value 10a. Figure 5 shows the apparatus 1 with the MEMS mirror 9 in a raised position such that the size 10b of the gap 10 between the mirror 9 and the OMS 3 is reduced. As has been discussed above, the OMS 3 substantially reflects the light linearly polarised along the X axis 14 and transmits the light linearly polarised along the Y axis 12so that it is incident on the mirror 9. The light linearly polarised along the Y axis 12 is reflected by the mirror 9, and once again substantially transmitted by the OMS 3. In this way, after reflection from the apparatus 1, the light linearly polarised along the Y axis 12 (reflected by the mirror 9) combines with the light linearly polarised along the X axis 14 (reflected by the OMS 3) but with a phase difference associated with the additional optical path length to and from the mirror 9. The additional geometric path length is equal to twice the size 10a of the gap 10, plus twice the thickness 5a of the nanostructures 5, and it will be understood that the additional optical path length experienced by the light linearly polarised along the Y axis 12 is approximately equal to this additional physical path length. The optical path length is of course also dependent on the refractive index of the medium of the gap 10 (air in the illustrated embodiment), and the refractive index of the medium of the substrate 7.

Therefore, by adjusting the position of the mirror 9 relative to the OMS 3, as shown in Fig. 5, the additional path length and hence the phase difference between the reflected light linearly polarised along the X axis 14 and the reflected light linearly polarised along the Y axis 12 can be adjusted. The phase difference determines the polarisation state of the resulting light 15 reflected from the apparatus and hence the polarisation state of the reflected light 15 can be continuously adjusted by continuously adjusting the position of the mirror 9.

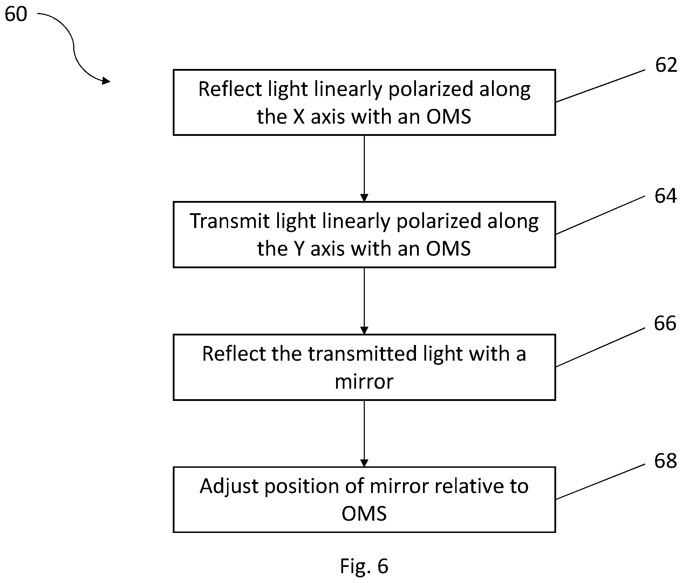

The operation described above is summarised in the flowchart 60 of Figure 6. At steps 62 and 64 the X and Y polarised light is respectively reflected and transmitted by the OMS 3. The transmitted Y polarised light is reflected by the mirror 9 at step 66 before being transmitted again by the OMS and combining interferometrically with the reflected X polarised light. At step 68 the position of the mirror 9 relative to the OMS 3 is adjusted to give an altered phase difference between X and Y polarisations and thus a different resultant polarisation in the interferometric combination.

It will be understood that the explanation of the operation of the device 1 given above has been simplified for clarity, and that there will be reflections within the device in addition to those discussed above. The explanation only takes into account the first reflection from the mirror 9, but in reality, not all of the light reflected by the mirror 9 will be immediately transmitted back through the OMS 3.

Rather, there is some reflection from both sides of the OMS 3 and so in theory there could be a large number of reflections back and forth between the mirror 9 and the OMS 3. For example, some light may be transmitted through the OMS 3, reflected from the mirror 9, and then re-transmitted through the OMS 3 immediately as discussed above. Also, some light may be transmitted through the OMS 3, reflected back and forth between the OMS 3 and the mirror 9 a plurality of times, and then transmitted back through the OMS 3. These reflections combine to form a total reflected signal according to the Fabry Perot equation (Equation 1). In the below equation, the medium of the substrate 7 has been designated '0', the medium of the gap 10 has been designated '1', and the medium of the mirror has been designated '2'. $r_{ab}$ is the reflection coefficient for light approaching the interface between media a and b from the side of medium a. $t_{ab}$ is the transmission coefficient for light approaching the interface between media a and b from the side of medium a. $d$ is the thickness of medium 1 (the gap 10). $\lambda$ is the wavelength of the light in medium 1. This equation is identical for both polarisation states, however, the reflection and transmission coefficients themselves are dependent on the polarisation. The coefficients are also dependent on the angle of the incident light, in this case the equation describes normal incidence.

$$r_{total} = r_{01} + \frac{t_{01}t_{10}r_{12}e^{i2\beta}}{1 - r_{10}r_{12}e^{i2\beta}} \tag{1}$$

$$\beta = \frac{2\pi}{\lambda}d$$

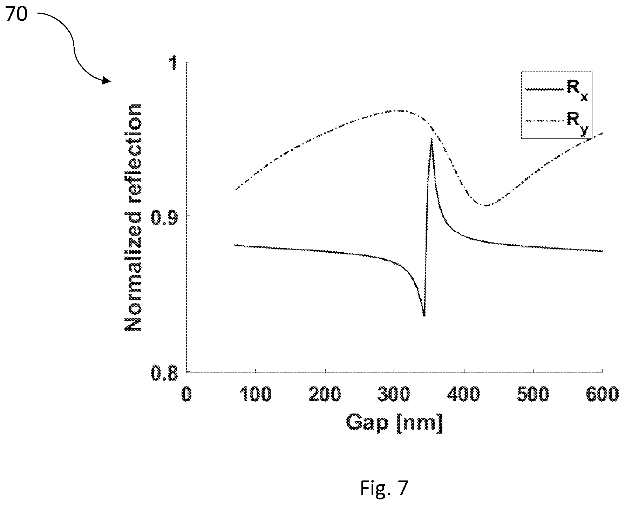

Figure 7 shows the normalized reflection of both the light linearly polarised along the X axis $R_x$ and the light linearly polarised along the Y axis $R_y$, plotted against the gap size 10a.

The light linearly polarised along the X axis 14 is predominantly reflected by the OMS 3, and so it can be seen that for large portions of the graph, $R_x$ does not vary significantly with gap size 10a. There is however an anomalous trough and subsequent spike around a gap size of 350 nm. This is caused by the portion of the light linearly polarised along the X axis 14 which is transmitted by the OMS 3, reflected by the mirror 9, and then retransmitted by the OMS 3 interfering with the light linearly polarised along the X axis 14 initially reflected from the OMS when the path difference is equal to a whole wavelength (at a gap size 10a of 350 nm).

Similarly, although the light linearly polarised along the Y axis 12 is predominantly transmitted by the OMS 3, a portion of the light linearly polarised along the Y axis 12 is reflected by the OMS 3, and so the variation of $R_y$ with gap size 10a seen in Figure 7 is associated with interference effects between the light linearly polarised along the Y axis 12 which is transmitted by the OMS 3, reflected by the mirror 9, and then retransmitted by the OMS 3, and the light linearly polarised along the Y axis 12 which is initially reflected from the OMS 3.

The OMS of the illustrated embodiment more effectively reflects the light linearly polarised along the X axis 14 than it transmits the light linearly polarised along the Y axis 12, and hence the interference effects shown in Fig. 7 are more pronounced for $R_y$ than for $R_x$.

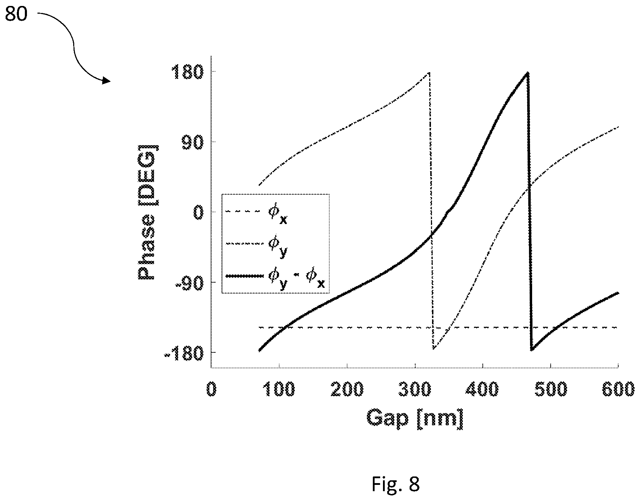

Figure 8 is a graph 80 showing the phase of the light reflected by the apparatus 1, plotted against the size of the gap 10. It can be seen from the graph 80 that the phase $\phi_x$ of the light linearly polarised along the X axis 14 does not depend on the gap size. This is because, in the illustrated embodiment, the light linearly polarised along the X axis is mostly reflected by the OMS 3, not by the mirror 9. Meanwhile, the phase $\phi_y$ of the light linearly polarised along the Y axis 12 does change with the size of the gap 10. This is because, as explained above, the light linearly polarised along the Y axis 12 is mostly transmitted by the OMS and reflected by the mirror 9, and so has an additional path length which varies with the size of the gap 10. In the illustrated embodiment, the nanostructure thickness 5a is 50 nm. The graph 80 was created using a simulation of light with a wavelength of 800nm. The graph 80 also shows the phase difference, $\phi_y - \phi_x$, between the light linearly polarised along the Y axis 12, and the light linearly polarised along the X axis 14. The difference $\phi_y - \phi_x$ should be zero when the additional optical path length experienced by the light linearly polarised along the Y axis 12 is equal to the wavelength, which in the illustrated embodiment occurs for a gap size of approximately 350 nm. Such a result can be seen in graph 80.

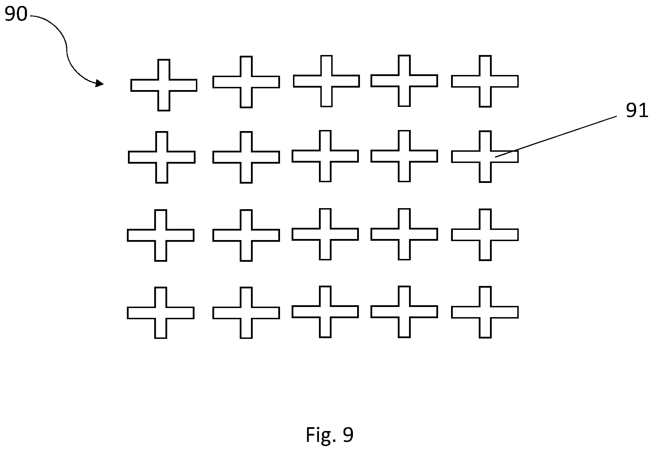

Figure 9 is a schematic plan view diagram of an OMS 90 with an alternative structure to that of OMS 3 shown in Figure 2. The OMS 90 comprises individual nanostructures 91 which have a cross-shaped footprint. In another possible variant the nanostructures could be L shaped.

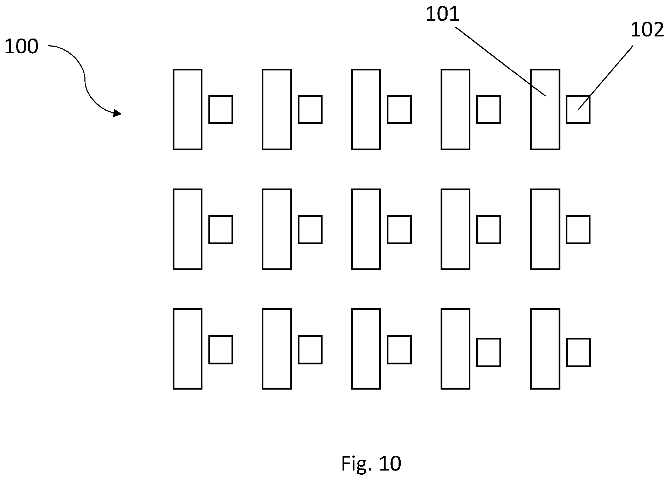

Figure 10 is a schematic plan view diagram of a further OMS 100. The OMS 100 comprises individual first nanostructures 101 and second nanostructures 102. First nanostructures 101 have a rectangular footprint, and each first nanostructure 101 is accompanied by a second nanostructure 102 which is smaller than the first nanostructure 101, and has a square or rectangular footprint.

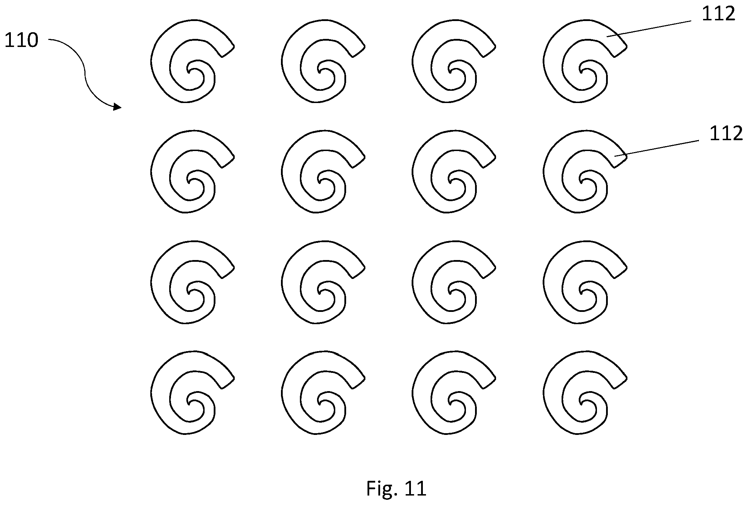

Figure 11 is a schematic plan view diagram of a further OMS 110. The OMS 110 comprises individual nanostructures 112 which have a spiral-shaped footprint to interact with incident light that has left or right handed circular polarisation. The transmitted circular polarisation will change handedness when reflected by the mirror 9, but when approaching the spirals 112 from the other side the spirals 112 will also change handedness, thereby allowing the polarisation to be transmitted back through the OMS 110.

As with the embodiment of Fig. 2, the nanostructures 91, 101, 102, 112 of Figs. 9, 10 and 11 have maximum dimensions less than the wavelength of the incident light and are arranged in vertical and horizontal periodically repeating patterns with spatial periods less than the wavelength of the incident light.

The OMS geometries shown in Figures 9, 10 and 11 are presented as examples, and it will be understood that OMSs with different geometries may be used in place of the OMS 3 of the illustrated embodiment. More complex geometries such as those shown in Figures 9, 10 and 11, give more degrees of freedom when designing the OMS which for example can allow the functionality of the OMS to be made more broadband.

Further, in the illustrated embodiment, the OMS is constructed from gold, but the skilled person will understand that other metals may be used provided that the nanostructures can be fabricated using the metal. For example, aluminium may be used.

## Claims

1. An apparatus (1) for adjustably changing the polarisation state of incident light having at least a first wavelength, the apparatus (1) comprising:

   a polarisation changing optical metasurface (OMS) (3) arranged to reflect light of a first polarisation state (12), and to transmit light of a second polarisation state (14), said second polarisation state being different to said first polarisation state; and
   a mirror (9) arranged to reflect the transmitted light of the second polarisation state (14), wherein the apparatus (1) is arranged to move the mirror and/or the polarisation changing OMS (3) relative to one another to alter a separation between the polarisation changing OMS (3) and the mirror (9), thereby altering a phase difference between the light reflected by the polarisation changing OMS (3) and the light reflected by the mirror (9) such that a combined polarisation state of light reflected by the apparatus (1) is adjustable.

2. An apparatus (1) as claimed in claim 1, wherein the polarisation changing OMS (3) is configured to predominantly reflect light of the first polarisation (12), and transmit light of the second polarisation (14), independent of the separation between the polarisation changing OMS (3) and the mirror (9).

3. An apparatus (1) as claimed in claim 1 or claim 2, wherein the apparatus (1) is arranged such that said separation (10a) between the polarisation changing OMS (3) and the mirror (9) has a minimum value of at least 10% of the first wavelength.

4. An apparatus (1) as claimed in any preceding claim, wherein the apparatus (1) is arranged such that the separation (10a) between the polarisation changing OMS (3) and the mirror (9) has a maximum value of at most 10 times the first wavelength.

5. An apparatus (1) as claimed in any preceding claim, wherein the apparatus (1) is arranged to alter the separation (10a) between the polarisation changing OMS (3) and the mirror (9) between respective minimum and maximum values which differ by at least 9/10 of the first wavelength.

6. An apparatus (1) as claimed in any preceding claim, wherein the polarisation changing OMS (3) is arranged to transmit less than 10% of the light of the first polarisation state (12), and to transmit more than 40% of the light of the second polarisation state (14).

7. An apparatus (1) as claimed in any preceding claim, wherein the polarisation changing OMS (3) is arranged such that the first polarisation is orthogonal to the second polarisation.

8. An apparatus (1) as claimed in any preceding claim, arranged to move the mirror (9) relative to the polarisation changing OMS (3), optionally wherein the mirror (9) is a Micro-electromechanical systems mirror.

9. A system comprising:
a light source configured to emit light of at least a first wavelength containing the first polarisation state (12) and the second polarisation state (14); and
an apparatus (1) as claimed in any of claims 1 to 8, wherein the light source and apparatus (1) are arranged such that the light emitted by the light source is incident on the apparatus (1).

10. A system as claimed in claim 9, wherein the light source is configured to emit linearly polarised light.

11. A method of adjustably changing the polarisation state of incident light having at least a first wavelength, the method comprising:

reflecting light from said incident light having a first polarisation state (12) with a polarisation changing OMS (3);
transmitting light from said incident light having a second polarisation state (14) through said polarisation changing OMS (3), said second polarisation state being different to said first polarisation state;
reflecting the transmitted light of the second polarisation state (14) with a mirror (9);
moving the mirror (9) and/or the polarisation changing OMS (3) in order to alter a separation (10a) between the polarisation changing OMS (3) and the mirror (9) thereby altering a phase difference between the light reflected by the polarisation changing OMS and the light reflected by the mirror such that a combined polarisation state of light reflected by both the polarisation changing OMS (3) and the mirror (9) is adjusted.

12. A method as claimed in claim 11, comprising moving the mirror (9) relative to the polarisation changing OMS (3).

13. A method as claimed in claim 11 or claim 12, wherein the separation 10(a) between the polarisation changing OMS (3) and the mirror (9) has a minimum value of at least 10% of the first wavelength.

14. A method as claimed in any of claims 11 to 13, wherein the separation (10a) between the polarisation changing OMS (3) and the mirror (9) has a maximum value of at most 10 times the first wavelength.

15. A method as claimed in any of claims 11 to 14, comprising altering the separation (10a) between the polarisation changing OMS (3) and the mirror (9) between respective minimum and maximum values which differ by at least 9/10 of the first wavelength.

**Patentansprüche**

1. Einrichtung (1) zum einstellbaren Ändern des Polarisationszustands von einfallendem Licht, das mindestens eine erste Wellenlänge aufweist, wobei die Einrichtung (1) umfasst:

eine polarisationsverändernde optische Metaoberfläche (OMS) (3), die so angeordnet ist, dass sie Licht eines ersten Polarisationszustands (12) reflektiert, und Licht eines zweiten Polarisationszustands (14) durchlässt, wobei sich der zweite Polarisationszustand vom ersten Polarisationszustand unterscheidet; und
einen Spiegel (9), der so angeordnet ist, dass er das durchgelassene Licht des zweiten Polarisationszustands (14) reflektiert, wobei die Einrichtung (1) so angeordnet ist, dass sie den Spiegel und/oder die polarisationsverändernde OMS (3) relativ zueinander bewegt, um einen Abstand zwischen der polarisationsverändernden OMS (3) und dem Spiegel (9) zu verändern, wodurch eine Phasendifferenz zwischen dem von der polarisationsverändernden OMS (3) reflektierten Licht und dem vom Spiegel (9) reflektierten Licht verändert wird, so dass ein kombinierter Polarisationszustand des von der Einrichtung (1) reflektierten Lichts einstellbar ist.

2. Einrichtung (1) nach Anspruch 1, wobei die polarisationsverändernde OMS (3) so konfiguriert ist, dass sie vorwiegend Licht der ersten Polarisation (12) reflektiert, und Licht der zweiten Polarisation (14) durchlässt, unabhängig vom Abstand zwischen der polarisationsverändernden OMS (3) und dem Spiegel (9).

3. Einrichtung (1) nach Anspruch 1 oder Anspruch 2, wobei die Einrichtung (1) so angeordnet ist, dass der Abstand (10a) zwischen der polarisationsverändernden OMS (3) und dem Spiegel (9) einen Minimalwert von mindestens 10 % der ersten Wellenlänge aufweist.

4. Einrichtung (1) nach einem vorstehenden Anspruch, wobei die Einrichtung (1) so angeordnet ist, dass der Abstand (10a) zwischen der polarisationsverändernden OMS (3) und dem Spiegel (9) einen Maximalwert von höchstens dem 10-Fachen der ersten Wellenlänge aufweist.

5. Einrichtung (1) nach einem vorstehenden Anspruch, wobei die Einrichtung (1) so angeordnet ist, dass sie den Abstand (10a) zwischen der polarisationsverändernden OMS (3) und dem Spiegel (9) zwischen jeweiligen Minimal- und Maximalwerten verändert, die sich um mindestens 9/10 der ersten Wellenlänge unterscheiden.

6. Einrichtung (1) nach einem vorstehenden Anspruch, wobei die polarisationsverändernde OMS (3) so angeordnet ist, dass sie weniger als 10 % des Lichts des ersten Polarisationszustands (12) durchlässt, und mehr als 40 % des Lichts des zweiten Polarisationszustands (14) durchlässt.

7. Einrichtung (1) nach einem vorstehenden Anspruch, wobei die polarisationsverändernde OMS (3) so angeordnet ist, dass die erste Polarisation orthogonal zur zweiten Polarisation ist.

8. Einrichtung (1) nach einem vorstehenden Anspruch, angeordnet, um den Spiegel (9) relativ zum polarisationsverändernden OMS (3) zu bewegen, optional wobei der Spiegel (9) ein mikroelektromechanischer Systemspiegel ist.

9. System, umfassend:
eine Lichtquelle, die so konfiguriert ist, dass sie Licht mit mindestens einer ersten Wellenlänge emittiert, das den ersten Polarisationszustand (12) und den zweiten Polarisationszustand (14) enthält; und
eine Einrichtung (1) nach einem der Ansprüche 1 bis 8, wobei die Lichtquelle und die Einrichtung (1) so angeordnet sind, dass das von der Lichtquelle emittierte Licht auf die Einrichtung (1) trifft.

10. System nach Anspruch 9, wobei die Lichtquelle dazu konfiguriert ist, linear polarisiertes Licht zu emittieren.

11. Verfahren zum einstellbaren Ändern des Polarisationszustands von einfallendem Licht, das mindestens eine erste Wellenlänge aufweist, wobei das Verfahren umfasst:

Reflektieren von Licht von dem einfallenden Licht, das einen ersten Polarisationszustand (12) mit einer polarisationsverändernden OMS (3) aufweist;
Durchlassen von Licht von dem einfallenden Licht, das einen zweiten Polarisationszustand (14) durch die polarisationsverändernde OMS (3) aufweist, wobei sich der zweite Polarisationszustand von dem ersten Polarisationszustand unterscheidet;
Reflektieren des durchgelassenen Lichts des zweiten Polarisationszustands (14) mit einem Spiegel (9);
Bewegen des Spiegels (9) und/oder der polarisationsverändernden OMS (3), um einen Abstand (10a) zwischen der polarisationsverändernden OMS (3) und dem Spiegel (9) zu verändern, wodurch eine Phasendifferenz zwischen dem von der polarisationsverändernden OMS reflektierten Licht und dem vom Spiegel reflektierten Licht verändert wird, so dass ein kombinierter Polarisationszustand des sowohl von der polarisationsverändernden OMS (3) als auch vom Spiegel (9) reflektierten Lichts eingestellt wird.

12. Verfahren nach Anspruch 11, umfassend ein Bewegen des Spiegels (9) relativ zum polarisationsverändernden OMS (3).

**13.** Verfahren nach Anspruch 11 oder Anspruch 12, wobei der Abstand 10(a) zwischen dem polarisationsverändernden OMS (3) und dem Spiegel (9) einen Minimalwert von mindestens 10 % der ersten Wellenlänge aufweist.

**14.** Verfahren nach einem der Ansprüche 11 bis 13, wobei der Abstand (10a) zwischen dem polarisationsverändernden OMS (3) und dem Spiegel (9) einen Maximalwert von höchstens dem 10-Fachen der ersten Wellenlänge aufweist.

**15.** Verfahren nach einem der Ansprüche 11 bis 14, umfassend ein Ändern des Abstands (10a) zwischen der polarisationsverändernden OMS (3) und dem Spiegel (9) zwischen jeweiligen Minimal- und Maximalwerten, die sich um mindestens 9/10 der ersten Wellenlänge unterscheiden.

**Revendications**

**1.** Appareil (1) de modification ajustable de l'état de polarisation de lumière incidente présentant au moins une première longueur d'onde, l'appareil (1) comprenant :

une métasurface optique (OMS) à changement de polarisation (3) agencée pour réfléchir une lumière d'un premier état de polarisation (12), et pour transmettre une lumière d'un second état de polarisation (14), ledit second état de polarisation étant différent dudit premier état de polarisation ; et
un miroir (9) agencé pour refléter la lumière transmise du second état de polarisation (14), dans lequel l'appareil (1) est agencé pour déplacer le miroir et/ou l'OMS à changement de polarisation (3) l'un par rapport à l'autre pour modifier une séparation entre l'OMS à changement de polarisation (3) et le miroir (9), en modifiant ainsi une différence de phase entre la lumière réfléchie par l'OMS à changement de polarisation (3) et la lumière réfléchie par le miroir (9) de sorte qu'un état de polarisation combiné d'une lumière réfléchie par l'appareil (1) soit ajustable.

**2.** Appareil (1) selon la revendication 1, dans lequel l'OMS à changement de polarisation (3) est configurée pour réfléchir principalement une lumière de la première polarisation (12), et transmettre une lumière de la seconde polarisation (14), indépendamment de la séparation entre l'OMS à changement de polarisation (3) et le miroir (9).

**3.** Appareil (1) selon la revendication 1 ou 2, dans lequel l'appareil (1) est agencé de sorte que ladite séparation (10a) entre l'OMS à changement de polarisation (3) et le miroir (9) présente une valeur minimale d'au moins 10 % de la première longueur d'onde.

**4.** Appareil (1) selon une quelconque revendication précédente, dans lequel l'appareil (1) est agencé de sorte que la séparation (10a) entre l'OMS à changement de polarisation (3) et le miroir (9) présente une valeur maximale d'au plus 10 fois la première longueur d'onde.

**5.** Appareil (1) selon une quelconque revendication précédente, dans lequel l'appareil (1) est agencé pour modifier la séparation (10a) entre l'OMS à changement de polarisation (3) et le miroir (9) entre des valeurs minimale et maximale respectives qui diffèrent d'au moins 9/10 de la première longueur d'onde.

**6.** Appareil (1) selon une quelconque revendication précédente, dans lequel l'OMS à changement de polarisation (3) est agencée pour transmettre moins de 10 % de la lumière du premier état de polarisation (12), et pour transmettre plus de 40 % de la lumière du second état de polarisation (14).

**7.** Appareil (1) selon une quelconque revendication précédente, dans lequel l'OMS à changement de polarisation (3) est agencée de sorte que la première polarisation soit orthogonale à la seconde polarisation.

**8.** Appareil (1) selon une quelconque revendication précédente, agencé pour déplacer le miroir (9) par rapport à l'OMS à changement de polarisation (3), facultativement dans lequel le miroir (9) est un miroir de système micro-électromécanique.

**9.** Système comprenant :

une source lumineuse configurée pour émettre une lumière d'au moins une première longueur d'onde contenant le premier état de polarisation (12) et le second état de polarisation (14) ; et
un appareil (1) selon l'une quelconque des revendications 1 à 8, dans lequel la source lumineuse et l'appareil (1) sont agencés de sorte que la lumière émise par la source lumineuse soit incidente sur l'appareil (1).

**10.** Système selon la revendication 9, dans lequel la source lumineuse est configurée pour émettre une lumière polarisée linéairement.

**11.** Procédé de modification ajustable de l'état de polarisation d'une lumière incidente présentant au moins une première longueur d'onde, le procédé comprenant :

la réflexion d'une lumière de ladite lumière incidente présentant un premier état de polarisation (12) avec une OMS à changement de polarisation (3) ;
la transmission d'une lumière de ladite lumière incidente présentant un second état de polarisation (14) à travers ladite OMS à changement de polarisation (3), ledit second état de polarisation étant différent dudit premier état de polarisation ;
la réflexion de la lumière transmise du second état de polarisation (14) avec un miroir (9) ;
le déplacement du miroir (9) et/ou de l'OMS à changement de polarisation (3) afin de modifier une séparation (10a) entre l'OMS à changement de polarisation (3) et le miroir (9) en modifiant ainsi une différence de phase entre la lumière réfléchie par l'OMS à changement de polarisation et la lumière réfléchie par le miroir de sorte qu'un état de polarisation combiné d'une lumière réfléchie à la fois par l'OMS à changement de polarisation (3) et le miroir (9) soit ajusté.

**12.** Procédé selon la revendication 11, comprenant le déplacement du miroir (9) par rapport à l'OMS à changement de polarisation (3).

**13.** Procédé selon la revendication 11 ou 12, dans lequel la séparation (10a) entre l'OMS à changement de polarisation (3) et le miroir (9) présente une valeur minimale d'au moins 10 % de la première longueur d'onde.

**14.** Procédé selon l'une quelconque des revendications 11 à 13, dans lequel la séparation (10a) entre l'OMS à changement de polarisation (3) et le miroir (9) présente une valeur maximale d'au plus 10 fois la première longueur d'onde.

**15.** Procédé selon l'une quelconque des revendications 11 à 14, comprenant la modification de la séparation (10a) entre l'OMS à changement de polarisation (3) et le miroir (9) entre des valeurs minimale et maximale respectives qui diffèrent d'au moins 9/10 de la première longueur d'onde.

Fig. 1

Fig. 2

EP 4 402 521 B1

Fig. 3

Fig. 4

EP 4 402 521 B1

Fig. 5

EP 4 402 521 B1

```
          ┌────────────────────────────┐
          │  Reflect light linearly    │────── 62
   60 ─┐  │  polarized along the X     │
       │  │  axis with an OMS          │
       ╰─→└────────────────────────────┘
                       │
                       ▼
          ┌────────────────────────────┐
          │  Transmit light linearly   │────── 64
          │  polarized along the Y     │
          │  axis with an OMS          │
          └────────────────────────────┘
                       │
                       ▼
          ┌────────────────────────────┐
          │  Reflect the transmitted   │────── 66
          │  light with a mirror       │
          └────────────────────────────┘
                       │
                       ▼
          ┌────────────────────────────┐
          │  Adjust position of mirror │────── 68
          │  relative to OMS           │
          └────────────────────────────┘
```

Fig. 6

EP 4 402 521 B1

70

Fig. 7

Fig. 8

EP 4 402 521 B1

90

91

Fig. 9

Fig. 10

112

112

110

Fig. 11

**EP 4 402 521 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A robust, non-resonant piezoelectric micromirror. **BAKKE, THOR** ; **IB-RUNE JOHANSEN**. 16th International Conference on Optical MEMS and Nanophotonics.. IEEE, 2011